# EUROPÄISCHE PATENTSCHRIFT

(11) **EP 2 191 186 B1**
(45) Veröffentlichungstag und Bekanntmachung des Hinweises auf die Patenterteilung: **18.04.2012**
(21) Anmeldenummer: 08784333.0
(22) Anmeldetag: 10.07.2008
(51) Int. Cl.: F16L 55/165

(54) **Relining-Schlauch**
Relining hose
Tuyau souple pour le revêtement de conduits

(30) Priorität: 16.08.2007 DE 102007038869
(43) Veröffentlichungstag der Anmeldung: 02.06.2010
(73) Patentinhaber: BKP Berolina Polyester Gmbh & Co. Kg, 16727 Velten (DE)
(72) Erfinder: LEHMANN, Jörg, 16761 Hennigsdorf (DE)
(74) Vertreter: Kohler Schmid Möbus
(86) Internationale Anmeldenummer: PCT/DE2008/001150
(87) Internationale Veröffentlichungsnummer: WO 2009/021479

(56) Entgegenhaltungen:
- EP-A- 0 510 306
- WO-A-99/05520
- DE-A1- 19 924 251
- DE-C1- 19 843 358
- US-A- 5 798 013

## Beschreibung

Die Erfindung betrifft einen Relining-Schlauch mit einem Innenschlauch, einem Außenschlauch und mindestens einer dazwischen vorgesehenen Schlauchlage aus UV-lichthärtendem Material.

Aus Dokument DE 198 43 358 C1 ist ein Schlauch mit einem Innenschlauch, mit einem Außenschlauch, mit einer dazwischen vorgesehenen Schlauchlage aus UV-lichthärtendem Material und mit einer den Außenschlauch umgebenden, entfernbaren Schutzfolie aus einem für UV-Licht undurchlässigen Material bekannt. Der Schlauch dient zur oberirdischen Verlegung und ist von der UV- Schutzfolie zum Schutz vor vorzeitigem Aushärten durch Sonnenlicht geschützt (Spalte 2, Zeilen 48-53 und Spalte 3, Zeilen 14-17).

Nicht begehbare schadhafte Rohrleitungen werden mit so genannten Relining-Verfahren saniert, wobei vor Ort aus aushärtbaren Formmassen ein Neurohr hergestellt wird. Dazu wird ein mit aushärtbarem Kunststoff getränkter Träger- bzw. Verstärkungswerkstoff (Relining-Schlauch) in ein zu sanierendes Altrohr eingebracht, positioniert und vor Ort ausgehärtet, wobei als aushärtbarer Kunststoff meist UV-lichthärtende Harze verwendet werden. Nachdem der eingebrachte Schlauch mittels Druckluft an die Innenwandung des Altrohrs gepresst ist, wird der Schlauch von innen mittels UV-Licht ausgehärtet.

Beim Einbringen in das zu sanierende Altrohr ist der Relining-Schlauch dem Tageslicht ausgesetzt. Damit das UV-lichthärtende Material des Relining-Schlauchs nicht bereits durch das im Tageslicht vorhandene UV-Licht ausgehärtet wird, ist es bekannt, entweder den Außenschlauch aus einem für UV-Licht undurchlässigen Material auszubilden oder den Relining-Schlauch mit einem weiteren Schutzschlauch aus einem für UV-Licht undurchlässigen Material zu umgeben. Im ersten Fall ist der für UV-Licht undurchlässige Außenschlauch gelb eingefärbt und damit bedingt durchsichtig, so dass der Relining-Schlauch nach seiner Herstellung von außen nicht auf Fehler innerhalb seiner aushärtbaren Schlauchlage, wie z.B. auf Luftblasen, kontrolliert werden kann. Bei der Rohrsanierung werden die beiden Enden des Relining-Schlauchs, da sie meist aus Schächten vorstehen, oft nicht ausgehärtet und müssen als Sondermüll teuer entsorgt werden. Im zweiten Fall wird der eigentliche Relining-Schlauch zusammen mit dem ihn lose umgebenden Schutzschlauch in das zu sanierende Altrohr eingebracht, wobei sich allerdings der Schutzschlauch an Hindernissen aufstauen und die optimale Anlage des Relining-Schlauchs am Altrohr verhindern kann. Zudem bereitet eine lose aufgelegte zweite Folie Schwierigkeiten beim Öffnen von Seitenzuläufen mit den üblichen Fräswerkzeugen. Auch das Handling während des Einbringes des Sanierungschlauches wird durch die lose Folie erschwert.

Es ist die Aufgabe der Erfindung, hier Abhilfe zu schaffen.

Diese Aufgabe wird erfindungsgemäß dadurch gelöst, dass der Außenschlauch von einer abreißbaren Schutzfolie aus einem für UV-Licht undurchlässigen Material umgeben ist, wobei die Schutzfolie an den Außenschlauch vollflächig, aber lösbar angeklebt ist.

Durch die Schutzfolie ist das UV-lichthärtende Material des Relining-Schlauchs vor UV-Licht geschützt. Der Relining-Schlauchs wird mit der Schutzfolie in das zu sanierende Altrohr (Kanal) eingebracht, d.h. die Folie verbleibt im Kanal und wird nur von den Endstücken, die im Kanal übrig bleiben und vom Relining-Schlauch (Liner) abgeschnitten werden, abgerissen, um diese dann aushärten und als Hausmüll entsorgen zu können.

Erfindungsgemäβ ist die Schutzfolie an den Relining-Schlauch vollflächig angeklebt, so dass sich die Schutzfolie nicht relativ zum eigentlichen Relining-Schlauch bewegen kann und der erfindungsgemäße Relining-Schlauch einfach und leicht handhabbar ist.

Die längsverlaufenden Folienenden der Schutzfolie können entweder aneinander anstoßen oder, was bevorzugt ist, miteinander überlappen.

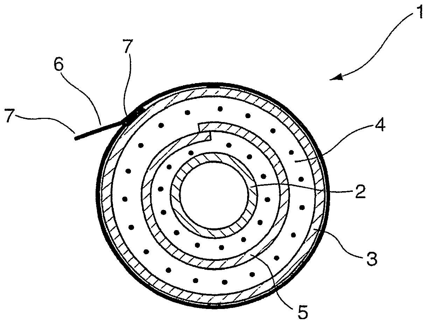

Weitere Vorteile und vorteilhafte Ausgestaltungen des Gegenstands der Erfindung sind der Beschreibung, der Zeichnung und den Ansprüchen entnehmbar. Die gezeigte und beschriebene Ausführungsform ist nicht als abschließende Aufzählung zu verstehen, sondern hat vielmehr beispielhaften Charakter für die Schilderung der Erfindung.

Der in der einzigen Figur gezeigte Relining-Schlauch **1** umfasst einen Innenschlauch **2**, einen Außenschlauch **3** und eine dazwischen vorgesehene Schlauchlage **4** aus UV-lichthärtendem Material, die im gezeigten Ausführungsbeispiel eine mit dem UVlichthärtenden Material getränkte Zwischenlage **5** aufweist.

Der Außenschlauch 3 ist von einer abreißbaren Schutzfolie **6** aus einem für UV-Licht undurchlässigen Material umgeben. Die Schutzfolie 6 ist an den Außenschlauch 3 vollflächig angeklebt, wobei die beiden längsverlaufenden Folienenden **7** der Schutzfolie 6 miteinander überlappen. Das überlappende äußere Folienende 7 ist nicht-klebend ausgebildet und dient so als Handhabe zum leichten Abreißen der Schutzfolie 6.

## Patentansprüche

1. Relining-Schlauch (1)
mit einem Innenschlauch (2),
mit einem Außenschlauch (3),
mit mindestens einer dazwischen vorgesehenen Schlauchlage (4) aus UV-lichthärtendem Material, und
mit einer den Außenschlauch (3) umgebenden, entfernbaren Schutzfolie (6) aus einem für UV-Licht undurchlässigen Material,
wobei die Schutzfolie (6) an den Außenschlauch (3) vollflächig, aber lösbar angeklebt ist.

2. Relining-Schlauch nach Anspruch 1 , **dadurch gekennzeichnet, dass** die längsverlaufenden Folienenden (7) der Schutzfolie (6) miteinander überlappen.

3. Relining-Schlauch nach Anspruch 2, **dadurch gekennzeichnet, dass** das überlappende äußere Folienende (7) nicht-klebend ausgebildet ist.

## Claims

1. Relining hose (1) comprising
an inner hose (2),
an outer hose (3),
at least one interposed hose layer (4) of a UV-light-curing material, and
a removable protective foil (6) that surrounds the outer hose (3) and is made from a material that is optically opaque to UV light, wherein the protective foil (6) is adhered over the entire surface to the outer hose (3) in a detachable manner.

2. Relining hose according to claim 1, **characterized in that** the foil ends (7), extending in a longitudinal direction, of the protective foil (6) overlap one another.

3. Relining hose according to claim 2, **characterized in that** the overlapping outer foil end (7) is designed to be non-adhesive.

## Revendications

1. Tuyau souple (1) de regarnissage, comprenant
un boyau souple (2) intérieur,
un boyau souple (3) extérieur,
au moins une couche souple intercalaire (4), en un matériau durcissant à la lumière UV, et
un feuil protecteur dissociable (6) en un matériau opaque à la lumière UV, qui entoure ledit boyau souple (3) extérieur,
sachant que ledit feuil protecteur (6) est rapporté par collage sur ledit boyau souple (3) extérieur, par toute la superficie, mais toutefois de manière détachable.

2. Tuyau souple de regarnissage selon la revendication 1, **caractérisé par le fait que** les extrémités (7) du feuil protecteur (6), qui s'étendent dans le sens longitudinal, se chevauchent mutuellement.

3. Tuyau souple de regarnissage selon la revendication 2, **caractérisé par le fait que** l'extrémité extérieure chevauchante (7) du feuil est de réalisation non adhésive.
